# EUROPEAN PATENT APPLICATION

(11) **EP 4 834 571 A1**
(43) Date of publication of application: **04.11.2026**
(21) Application number: 24931660.5
(22) Date of filing: 28.08.2024
(51) Int. Cl.: B29C 65/54, B29C 65/78, H01M 10/058, H01M 10/0525

(54) **PARTICLE EMBEDDING DEVICE, PARTICLE EMBEDDING SYSTEM AND BATTERY PRODUCTION LINE**

(30) Priority: 28.03.2024 CN 202420614668 U
(71) Applicant: Contemporary Amperex Technology Co., Limited, Ningde, Fujian 352100 (CN)
(72) Inventor: LI, Mingling, Ningde, Fujian 352100 (CN); LIU, Xin, Ningde, Fujian 352100 (CN); HUANG, Qisen, Ningde, Fujian 352100 (CN); LIU, Xianghui, Ningde, Fujian 352100 (CN); CAI, Qiguo, Ningde, Fujian 352100 (CN); LI, Cheng, Ningde, Fujian 352100 (CN)
(74) Representative: Ziebig Hengelhaupt Intellectual Property Attorneys Patentanwaltskanzlei PartGmbB
(86) International application number: PCT/CN2024/115253
(87) International publication number: WO 2025/200287

(57) **Abstract**

The present application relates to a particle embedding device, a particle embedding system and a battery production line. The particle embedding device (100) comprises a film feeding mechanism (10), embedding mechanisms (20) and a feeding mechanism (30). The film feeding mechanism (10) is used for conveying a film to be treated (400); the embedding mechanisms (20) are rotatably arranged around a set axis, the set axis is perpendicular to the traveling direction of said film (400), and the surface of each embedding mechanism (20) is provided with suction portions (21) that can be arranged close to said film (400), and can also be arranged away from said film (400); the feeding mechanism (30) is communicated with the embedding mechanisms (20), and is used for providing objects to be embedded (40) to the suction portions (21); and when the suction portions (21) are close to said film (400), said objects (40) located at the suction portions (21) can be embedded into said film (400). When said film (400) passes through the embedding mechanisms (20) during traveling, said objects (40) can be embedded into the surface of said film (400), so that the properties of said film (400) are changed. The strength, the elastic modulus, the surface roughness and other properties of the treated film (400) are improved, and therefore the strength, the elastic modulus, the surface roughness and other properties of a finally obtained composite current collector are also improved.

## Description

### CROSS-REFERENCE TO RELATED APPLICATIONS

The present application claims priority to Chinese Patent Application No. 202420614668.4, filed on March 28, 2024 and entitled "PARTICLE EMBEDDING DEVICE, PARTICLE EMBEDDING SYSTEM, AND BATTERY PRODUCTION LINE", which is incorporated herein by reference in its entirety.

### TECHNICAL FIELD

The present application relates to the field of batteries, and in particular, to a particle embedding device, a particle embedding system, and a battery production line.

### BACKGROUND

A composite current collector is a novel current collector material formed by compounding polymer materials and metals. The composite current collector plays an important role in the field of secondary batteries such as lithium-ion batteries. The composite current collector is usually of a sandwich structure, consisting of a flexible organic film (e.g., polymer materials such as PP, PE, PET, PPS, and PI) as an intermediate layer and metal conductive layers as upper and lower layers. Alternatively, glue layers are additionally arranged between the metal conductive layers and the organic film layer. In some cases, the elastic modulus of the intermediate film layer or the glue layers of the composite current collector is relatively low, thus resulting in low elastic modulus of the composite current collector compared with that of a current collector adopting copper-aluminum foils.

### SUMMARY

In view of the foregoing problem, the present application provides a particle embedding device, a particle embedding system, and a battery production line.

According to a first aspect, the present application provides a particle embedding device. The particle embedding device includes a film feeding mechanism, an embedding mechanism, and a feeding mechanism. The film feeding mechanism is configured to convey a to-be-treated film. The embedding mechanism is rotatably arranged around a set axis. The set axis is perpendicular to a traveling direction of the to-be-treated film. A surface of the embedding mechanism is provided with suction portions. The suction portions can be arranged close to the to-be-treated film, and the suction portions can also be arranged away from the to-be-treated film. The feeding mechanism is communicated with the embedding mechanism. The feeding mechanism is configured to provide to-be-embedded objects to the suction portions. When the suction portions are close to the to-be-treated film, the to-be-embedded objects located at the suction portions can be embedded into the to-be-treated film.

In the technical solutions of embodiments of the present application, when the to-be-treated film passes through the embedding mechanism during traveling, the to-be-embedded objects may be embedded into a surface of the to-be-treated film, so that the properties of the to-be-treated film are changed. For example, by uniformly embedding the to-be-embedded objects on the surface of the to-be-treated film, the strength and elastic modulus of the to-be-treated film can be improved. By improving the surface roughness of the to-be-treated film, the surface roughness of film layers bonded together, such as the to-be-treated film and a glue layer, can be improved. Alternatively, the properties of the to-be-treated film are improved by adjusting preparation materials of the to-be-embedded objects. For example, a flame retardant is doped into the preparation materials of the to-be-embedded objects, to improve the flame retardancy of the to-be-treated film.

The strength, elastic modulus, surface roughness, and other properties of the treated film are improved. Therefore, the strength, elastic modulus, surface roughness, and other properties of a finally obtained composite current collector are also improved.

In some embodiments, the embedding mechanism includes a roller shaft. The roller shaft rotates around the set axis. A surface of the roller shaft is provided with the suction portions.

The adoption of the roller shaft can not only minimize a contact area between the roller shaft and the to-be-treated film, thereby reducing the probability that the to-be-treated film is bonded to the roller shaft and cannot continuously travel, but also simplify the structure of the embedding mechanism and reduce the preparation difficulty of the embedding mechanism.

In some embodiments, a plurality of roller shafts are provided. At least two of the roller shafts are spaced apart oppositely to form a gap allowing passage of the to-be-treated film. A spacing between the at least two roller shafts spaced apart oppositely is adjustable to change a size of the gap.

In this way, by adjusting the size of the gap, the to-be-treated films of different thicknesses are allowed to travel, an embedding depth of the to-be-embedded objects into the to-be-treated film can be adjusted, and the to-be-embedded objects can be embedded into two surfaces of the to-be-treated film simultaneously, so as to further improve the properties of the to-be-treated film.

In some embodiments, the feeding mechanism includes a plurality of feeding members. The feeding members are in one-to-one correspondence with the roller shafts. The feeding members are configured to provide the to-be-embedded objects to the suction portions of the roller shafts.

By means of a one-to-one correspondence between the roller shafts and the feeding members, to-be-embedded objects made of different materials may be placed into different feeding members, and the different to-be-embedded objects may be embedded into the to-be-treated film, thereby diversifying the properties of the obtained to-be-treated film.

In some embodiments, a plurality of suction portions are provided. The plurality of suction portions are distributed around the set axis. The plurality of suction portions are further spaced apart on the surface of the roller shaft.

By arranging the plurality of suction portions on the roller shaft, the plurality of to-be-embedded objects may be embedded into the surface of the to-be-treated film, and the embedding speed of the to-be-embedded objects into the to-be-treated film can be increased, thereby improving the working efficiency of the particle embedding device.

In some embodiments, the embedding mechanism further includes an air extraction member. The suction portions each include a suction hole. The suction holes are communicated with the air extraction member.

With the foregoing arrangement, an air extraction pressure of the air extraction member can be adjusted according to the size and inherent characteristics of the to-be-embedded objects, thereby changing the suction force of the suction holes on the to-be-embedded objects to adapt to different types of to-be-treated films. In the process of embedding the to-be-embedded objects into the to-be-treated film, the probability that the to-be-embedded objects cannot be rapidly embedded into the to-be-treated film and thus cause scratches on the surface of the to-be-treated film can be reduced.

In some embodiments, a plurality of grooves are formed in the surface of the embedding mechanism. A groove wall of each groove is provided with the corresponding suction hole.

The grooves can position the to-be-embedded objects. In the process of embedding the to-be-embedded objects into the to-be-treated film, the probability that the to-be-embedded objects deviate from preset positions and fail to be embedded into the preset embedding positions of the to-be-treated film can be reduced, and the probability of the to-be-embedded objects being embedded into the to-be-treated film can be improved.

In some embodiments, the grooves have a depth of H, where 50 nm ≤ H ≤ 2000 nm.

When the size of the to-be-embedded objects remains unchanged, the exposed size of the to-be-embedded objects to the outside changes with the depth change of the grooves, and the embedding depth of the to-be-embedded objects into the to-be-treated film also changes accordingly. With the foregoing arrangement, an application range of the particle embedding device can be expanded to obtain different to-be-treated films.

In some embodiments, the embedding mechanism is provided with a heating portion. The heating portion is configured to heat the to-be-embedded objects located at the suction portions.

When the to-be-treated film travels to an operating region of the roller shaft, the to-be-treated film comes into contact with the roller shaft and is softened. The softened to-be-treated film and the to-be-embedded objects can be combined more easily, thereby reducing the difficulty of embedding the to-be-embedded objects into the to-be-treated film.

In some embodiments, the feeding mechanism is provided with a storage cavity. The storage cavity is configured to store the to-be-embedded objects. A discharge outlet of the storage cavity is communicated with the suction portions.

When all the to-be-embedded objects that enter the suction portions in a previous round are embedded into the to-be-treated film, the remaining to-be-embedded objects in the storage cavity may be conveyed to the suction portions, which serves as preparation for a next round of embedding the to-be-embedded objects, thereby avoiding low efficiency of the particle embedding device caused by the temporary shutdown of the embedding mechanism for the conveying of the to-be-embedded objects to the suction portions, thus enabling the timely conveying of the to-be-embedded objects to the suction portions.

In some embodiments, the embedding mechanism partially enters the storage cavity via the discharge outlet. In this way, the manner in which the suction portions suck the to-be-embedded objects in the storage cavity is simplified.

In some embodiments, the feeding mechanism further includes a shield plate. The shield plate is movable relative to the storage cavity. The shield plate is capable of shielding the discharge outlet. The discharge outlet is capable of being exposed from the shield plate.

This arrangement not only simplifies the manner in which the to-be-embedded objects in the storage cavity are sucked by the suction portions, but also simplifies the structure of the feeding mechanism and reduces the preparation difficulty of the feeding mechanism.

According to a second aspect, the present application provides a particle embedding system, including the particle embedding device in the foregoing embodiment. The film feeding mechanism includes a first unwinding member. The first unwinding member is configured to unwind the to-be-treated film.

When the to-be-treated film treated by the particle embedding system passes through the embedding mechanism during traveling, the to-be-embedded objects may be embedded into a surface of the to-be-treated film, so that the properties of the to-be-treated film are changed. For example, by uniformly embedding the to-be-embedded objects on the surface of the to-be-treated film, the strength and elastic modulus of the to-be-treated film can be improved. By improving the surface roughness of the to-be-treated film, the surface roughness of film layers bonded together, such as the to-be-treated film and a glue layer, can be improved. Alternatively, the properties of the to-be-treated film are improved by adjusting preparation materials of the to-be-embedded objects. For example, a flame retardant is doped into the preparation materials of the to-be-embedded objects, to improve the flame retardancy of the to-be-treated film.

The strength, elastic modulus, surface roughness, and other properties of the treated film are improved. Therefore, the strength, elastic modulus, surface roughness, and other properties of a finally obtained composite current collector are also improved.

In some embodiments, the particle embedding system further includes a winding device. The winding device includes a second unwinding member and a winding member. The second unwinding member is configured to unwind a protective film. The protective film and the to-be-treated film with the to-be-embedded objects embedded therein are capable of traveling together to the winding member and are wound into an integrated assembly by the winding member.

The protective film unwound by the second unwinding member may protect the to-be-treated film, to reduce the probability that protrusions formed on the surface of the to-be-treated film due to the embedding of the to-be-embedded objects have an excessively large height and pierce other parts to be treated when the to-be-treated film is wound.

In some embodiments, the particle embedding system further includes a glue coating device. The glue coating device is configured to perform glue coating on the to-be-treated film that has been treated by the particle embedding device.

When performing the process of obtaining a composite current collector containing a glue layer, the second unwinding member is not required to operate, and glue coating can be directly applied to the to-be-treated film with the to-be-embedded objects embedded therein, thereby expanding the application range of the particle embedding system.

According to a third aspect, the present application provides a battery production line, including the particle embedding system in the foregoing embodiment.

When the to-be-treated film treated by the battery production line passes through the embedding mechanism during traveling, the to-be-embedded objects may be embedded into a surface of the to-be-treated film, so that the properties of the to-be-treated film are changed. For example, by uniformly embedding the to-be-embedded objects on the surface of the to-be-treated film, the strength and elastic modulus of the to-be-treated film can be improved. By improving the surface roughness of the to-be-treated film, the surface roughness of film layers bonded together, such as the to-be-treated film and a glue layer, can be improved. Alternatively, the properties of the to-be-treated film are improved by adjusting preparation materials of the to-be-embedded objects. For example, a flame retardant is doped into the preparation materials of the to-be-embedded objects, to improve the flame retardancy of the to-be-treated film.

The strength, elastic modulus, surface roughness, and other properties of the treated film are improved. Therefore, the strength, elastic modulus, surface roughness, and other properties of a finally obtained composite current collector are also improved.

The foregoing description only refers to an overview of the technical solutions of the present application. In order to understand the technical means of the present application more clearly such that it can be implemented according to the content of the specification, and to make the foregoing and other purposes, features, and advantages of the present application more apparent, specific implementations of the present application are listed below.

### BRIEF DESCRIPTION OF THE DRAWINGS

In order to provide a clearer explanation of the technical solutions of the embodiments of the present application, a brief introduction will be given to the accompanying drawings required in the embodiments of the present application. It is evident that the accompanying drawings described below are only some embodiments of the present application. For a person of ordinary skill in the art, other accompanying drawings can be obtained based on these drawings without any creative effort. In the accompanying drawings:
FIG. 1 FIG. 1 is a schematic structural diagram of an embedding mechanism of a particle embedding system according to one or more embodiments, distributed along a third direction;
FIG. 2 is a schematic structural diagram of an embedding mechanism of a particle embedding system according to one or more embodiments, distributed along a first direction; and
FIG. 3 is a schematic structural diagram of a roller shaft of a particle embedding system according to one or more embodiments.

Reference numerals in specific implementations are as follows:
1000: particle embedding system;
100: particle embedding device;
10: film feeding mechanism; 11: first unwinding member; 20: embedding mechanism; 21: suction portion; 22: roller shaft; 23: groove; 30: feeding mechanism; 31: feeding member; 32: storage cavity; 33: shield plate; 40: to-be-embedded object; 50: guide roller;
200: winding device; 210: second unwinding member; 220: winding member; 230: flattening roller; 240: deviation correcting roller; 250: pressure roller; 400: to-be-treated film; X: first direction; Y: second direction; and Z: third direction.

### DETAILED DESCRIPTION

The technical solutions in embodiments of the present application are clearly and completely described in the following with reference to the accompanying drawings in the embodiments of the present application. Apparently, the described embodiments are merely some rather than all of the embodiments of the present application. All other embodiments obtained by a person of ordinary skill in the art based on the embodiments of the present application without creative efforts shall fall within the protection scope of the present application.

Unless otherwise defined, meanings of all technical and scientific terms used in this specification are the same as those usually understood by a person skilled in the art to which the present application belongs. The terms used in the specification are merely intended to describe objectives of specific examples, but are not intended to limit the present application. The terms "including" and "having" and any variants thereof in the specification and claims of the present application and in the description of the accompanying drawings are intended to cover non-exclusive inclusion.

In the description of the embodiments of the present application, the technical terms "first", "second", and the like, where appearing, are only used for distinguishing different objects, and should not be understood as indicating or implying relative importance or implying the number, specific order or primary and secondary relationship of indicated technical features. In the description of the embodiments of the present application, "a plurality of" means two or more, unless otherwise expressly and specifically defined.

Reference herein to an "embodiment" means that a particular feature, structure, or characteristic described in connection with the embodiment may be included in at least one embodiment of the present application. The term appearing at different positions of the specification may not necessarily refer to the same embodiment or an independent or alternative embodiment that is mutually exclusive with another embodiment. A person skilled in the art explicitly or implicitly understands that the embodiments described in this specification may be combined with other embodiments.

In the description of the embodiments of the present application, the term "a plurality of", where appearing, means two or more (including two).

In the description of the embodiments of the present application, the directions or positional relationships indicated by the technical terms such as "thickness", "upper", "lower", "front", "rear", "top", "inside", and "outside", where appearing, are only for the convenience of describing the embodiments of the present application and simplifying the descriptions, rather than indicating or implying that the involved device or element should have a specific orientation or should be configured or operated in the specific orientation, therefore, they cannot be understood as limiting the embodiments of the present application.

In the description of the embodiments of the present application, unless otherwise expressly specified and defined, the technical terms "mounted", "connected to", "connected with", "fixed", or the like, where appearing, should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For a person of ordinary skill in the art, the specific meanings of the foregoing terms in the embodiments of the present application may be interpreted according to specific situations.

In an elastic deformation stage of a material, a relationship between stress and strain is directly proportional. A proportionality coefficient is elastic modulus. The elastic modulus is a measure of an ability of an object to resist elastic deformation. In general, a material with a low elastic modulus is susceptible to the affect of stress, and deformation or cracking is likely to occur at a position of the material under stress. A composite current collector is typically of a sandwich structure. In addition to the composite current collector with a conventional sandwich structure, there is also a composite current collector with a glue layer added between a film layer and a metal layer. A low elastic modulus of the glue layer will result in a low elastic modulus of the composite current collector containing the glue layer, thereby causing the obtained composite current collector to be prone to damage during use.

To improve the elastic modulus of the composite current collector, a particle embedding device provided in an embodiment of the present application uses a film feeding mechanism to convey a to-be-treated film. When the to-be-treated film travels to an operating region of an embedding mechanism and suction portions of the embedding mechanism are close to the to-be-treated film, to-be-embedded objects sucked by the suction portions can be embedded into the to-be-treated film, so as to improve the elastic modulus of the to-be-treated film. After the to-be-treated film is treated through subsequent procedures to obtain a composite current collector, the elastic modulus of the obtained composite current collector is thus enhanced.

A particle embedding device 100 disclosed in an embodiment of the present application may be applied to various procedures requiring film layer treatment, such as a coating process.

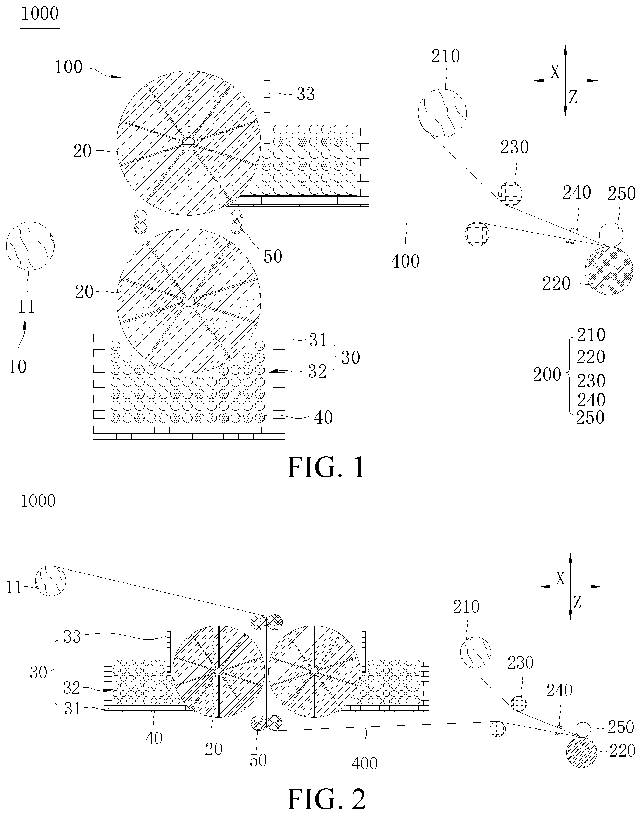

Referring to FIG. 1, an embodiment of the present application provides a particle embedding device 100. The particle embedding device 100 includes a film feeding mechanism 10, an embedding mechanism 20, and a feeding mechanism 30. The film feeding mechanism 10 is configured to convey a to-be-treated film 400. The embedding mechanism 20 is rotatably arranged around a set axis. The set axis is perpendicular to a traveling direction of the to-be-treated film 400. A surface of the embedding mechanism 20 is provided with suction portions 21. The suction portions 21 can be arranged close to the to-be-treated film 400, and the suction portions 21 can also be arranged away from the to-be-treated film 400. The feeding mechanism 30 is communicated with the embedding mechanism 20. The feeding mechanism 30 is configured to provide to-be-embedded objects 40 to the suction portions 21. When the suction portions 21 are close to the to-be-treated film 400, the to-be-embedded objects 40 located at the suction portions 21 can be embedded into the to-be-treated film 400.

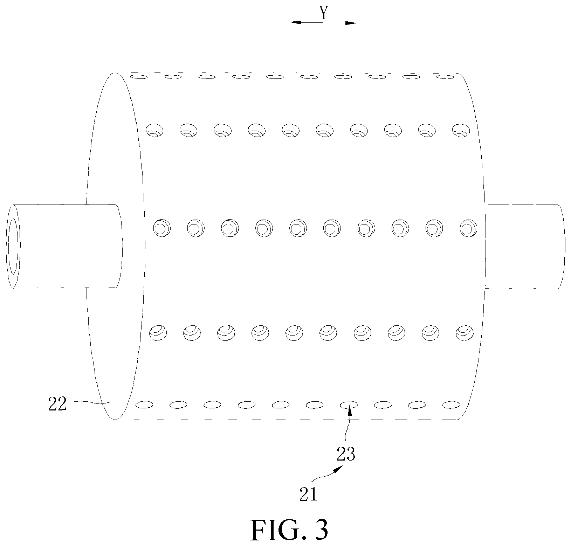

As shown in FIG. 1 and FIG. 3, the to-be-treated film 400 conveyed by the film feeding mechanism 10 may travel along a first direction X. The set axis around which the embedding mechanism 20 rotates may extend along a second direction Y (as shown in FIG. 3). The second direction Y is perpendicular to the first direction X. When the to-be-treated film 400 continuously travels into an operating region of the embedding mechanism 20 and the embedding mechanism 20 rotates around the set axis, the suction portions 21 of the embedding mechanism 20 can perform a reciprocating motion toward and away from the to-be-treated film 400.

The feeding mechanism 30 may store the to-be-embedded objects 40 therein. The to-be-embedded objects 40 may be inorganic particles. Preparation materials and particle sizes of the particles may be adjusted according to actual conditions.

The working principle of the particle embedding device 100 is described below with reference to an example shown in FIG. 1.

The feeding mechanism 30 is started, and the to-be-embedded objects 40 conveyed by the feeding mechanism 30 can enter the suction portions 21 of the embedding mechanism 20. The film feeding mechanism 10 conveys the to-be-treated film 400 along the first direction X. The embedding mechanism 20 may operate simultaneously with the film feeding mechanism 10 or operate later than the film feeding mechanism 10. When the to-be-treated film 400 travels to the embedding mechanism 20, the suction portions 21 of the embedding mechanism 20 are directed exactly toward the to-be-treated film 400. Since the embedding mechanism 20 rotates around the set axis extending along the second direction Y, the to-be-treated film 400 travels along the first direction X (the first direction X is perpendicular to the second direction Y), and the to-be-treated film 400 has particular stickiness, the to-be-treated film 400 sucks the to-be-embedded objects 40 while traveling after the to-be-embedded objects 40 are embedded into the to-be-treated film 400, such that the to-be-embedded objects 40 can be separated from the suction portions 21 and can travel together with the to-be-treated film 400.

When the to-be-treated film 400 passes through the embedding mechanism 20 during traveling, the to-be-embedded objects 40 may be embedded into a surface of the to-be-treated film 400, so that the properties of the to-be-treated film 400 are changed. For example, by uniformly embedding the to-be-embedded objects 40 on the surface of the to-be-treated film 400, the strength and elastic modulus of the to-be-treated film 400 can be improved. By improving the surface roughness of the to-be-treated film 400, the surface roughness of film layers bonded together, such as the to-be-treated film 400 and a glue layer, can be improved. Alternatively, the properties of the to-be-treated film 400 are improved by adjusting preparation materials of the to-be-embedded objects 40. For example, a flame retardant is doped into the preparation materials of the to-be-embedded objects 40, to improve the flame retardancy of the to-be-treated film 400.

The strength, elastic modulus, surface roughness, and other properties of the treated film 400 are improved. Therefore, the strength, elastic modulus, surface roughness, and other properties of a finally obtained composite current collector are also improved.

Referring to FIG. 1 further, in some embodiments, the particle embedding device 100 further includes a guide roller 50. The guide roller 50 may be arranged on a path in which the to-be-treated film 400 passes through the embedding mechanism 20 during traveling. A surface of the guide roller 50 may be wrapped with materials such as rubber and sponge. When the to-be-treated film 400 travels to the guide roller 50, the guide roller 50 can position and tension the to-be-treated film 400, such that the to-be-treated film 400 can enter the embedding mechanism 20 in a preset posture and be operated by the embedding mechanism 20.

It may be understood that a plurality of suction portions 21 may be spaced apart on a rotating surface of the embedding mechanism 20. One suction portion 21 may suck one to-be-embedded object 40, or one suction portion 21 may suck a plurality of to-be-embedded objects 40 simultaneously.

In some embodiments, as shown in FIG. 3, the embedding mechanism 20 includes a roller shaft 22. The roller shaft 22 rotates around the set axis. A surface of the roller shaft 22 is provided with the suction portions 21.

The roller shaft 22 may be made of steel, and a hollow pipeline is provided inside the roller shaft 22 to allow the to-be-embedded objects 40 to enter and reach the suction portions 21. The adoption of the roller shaft 22 can not only minimize a contact area between the roller shaft 22 and the to-be-treated film 400, thereby reducing the probability that the to-be-treated film 400 is bonded to the roller shaft 22 and cannot continuously travel, but also simplify the structure of the embedding mechanism 20 and reduce the preparation difficulty of the embedding mechanism 20.

Specifically, in some embodiments, a plurality of roller shafts 22 are provided. At least two of the roller shafts 22 are spaced apart oppositely to form a gap allowing passage of the to-be-treated film 400. A spacing between the at least two roller shafts 22 spaced apart oppositely is adjustable to change a size of the gap.

By way of example, as shown in FIG. 1, there are two roller shafts 22 which are spaced apart along a third direction Z. The third direction Z is parallel to a gravity direction. The gap formed between two roller shafts 22 spaced apart along the third direction Z allows the to-be-treated film 400 to travel. The size of the gap can be adjusted by changing the spacing between the two roller shafts 22 to allow the to-be-treated films 400 of different thicknesses to travel. Since the to-be-embedded objects 40 carried by the roller shafts 22 are arranged to protrude from the surfaces of the roller shafts 22, an embedding depth of the to-be-embedded objects 40 into the to-be-treated film 400 increases accordingly when the spacing between the two roller shafts 22 is changed (e.g., reduced). Therefore, the embedding depth of the to-be-embedded objects 40 into the to-be-treated film 400 can also be adjusted by changing the spacing between the two roller shafts 22.

In addition, when the to-be-treated film 400 travels to the gap between the two roller shafts 22, the two roller shafts 22 face two opposite surfaces of the to-be-treated film 400, respectively. The suction portions 21 of each roller shaft 22 may embed the to-be-embedded objects 40 into the corresponding surfaces of the to-be-treated film 400. In this way, the to-be-embedded objects 40 may be embedded into the two surfaces of the to-be-treated film 400 simultaneously, so as to further improve the properties of the to-be-treated film 400.

In some embodiments, the feeding mechanism 30 includes a plurality of feeding members 31. The feeding members 31 are in one-to-one correspondence with the roller shafts 22. The feeding members 31 are configured to provide the to-be-embedded objects 40 to the suction portions 21 of the roller shafts 22.

For example, in the example shown in FIG. 1, two roller shafts 22 and two feeding members 31 are provided, with one roller shaft 22 corresponding to and communicated with one feeding member 31. By means of a one-to-one correspondence between the roller shafts 22 and the feeding members 31, to-be-embedded objects 40 made of different materials may be placed into different feeding members 31, and the different to-be-embedded objects 40 may be embedded into the to-be-treated film 400, thereby diversifying the properties of the obtained to-be-treated film 400.

Further, as shown in FIG. 3, in some embodiments, a plurality of suction portions 21 are provided. The plurality of suction portions 21 are distributed around the set axis. The plurality of suction portions 21 are further spaced apart on the surface of the roller shaft 22.

Two adjacent suction portions 21 may be equally spaced apart, or the spacing between two adjacent suction portions 21 may increase gradually. The specific number and positions of the suction portions 21 provided may be adjusted according to actual conditions.

By arranging the plurality of suction portions 21 on the roller shaft 22, the plurality of to-be-embedded objects 40 may be embedded into the surface of the to-be-treated film 400, and the embedding speed of the to-be-embedded objects 40 into the to-be-treated film 400 can be increased, thereby improving the working efficiency of the particle embedding device 100.

In some embodiments, the embedding mechanism 20 further includes an air extraction member (not shown). The suction portions 21 each include a suction hole. The suction holes are communicated with the air extraction member.

The air extraction member may be a variable-frequency air extraction pump with an adjustable air extraction pressure. An air path is arranged inside the roller shaft 22, with one end of the air path communicated with the suction holes and the other end communicated with the air extraction member. A sealed connection is adopted at a joint between the air extraction member and the roller shaft 22, such as an oil seal.

With the foregoing arrangement, an air extraction pressure of the air extraction member can be adjusted according to the size and inherent characteristics of the to-be-embedded objects 40, thereby changing the suction force of the suction holes on the to-be-embedded objects to adapt to different types of to-be-treated films 400. In the process of embedding the to-be-embedded objects 40 into the to-be-treated film 400, the probability that the to-be-embedded objects 40 cannot be rapidly embedded into the to-be-treated film 400 and thus cause scratches on the surface of the to-be-treated film 400 can be reduced.

In some embodiments, all the suction holes are communicated with the same air extraction member. In other embodiments, all the suction holes are communicated with different air extraction members. In this way, different air extraction members may be activated as required, and the corresponding air extraction members provide suction force for different suction holes only when the suction holes are required to suck the to-be-embedded objects 40. This arrangement improves the use flexibility of the particle embedding device 100.

Specifically, referring to FIG. 3 further, in some embodiments, a plurality of grooves 23 are formed in the surface of the embedding mechanism 20. A groove wall of each groove 23 is provided with the corresponding suction hole.

The shape of the grooves 23 may be, but is not limited to, a circle or a square. When the to-be-embedded objects 40 are sucked by the suction holes and enter the grooves 23, the to-be-embedded objects 40 are partially located inside the grooves 23 and partially exposed to the outside, respectively. The grooves 23 can position the to-be-embedded objects 40. In the process of embedding the to-be-embedded objects 40 into the to-be-treated film 400, the probability that the to-be-embedded objects 40 deviate from preset positions and fail to be embedded into the preset embedding positions of the to-be-treated film 400 can be reduced, and the probability of the to-be-embedded objects 40 being embedded into the to-be-treated film 400 can be improved.

In addition, when the to-be-embedded objects 40 are brought close to the to-be-treated film 400 by the roller shafts 22, the portions of the to-be-embedded objects 40 exposed to the outside can be embedded into the to-be-treated film 400, and the obtained surface roughness of the to-be-treated film 400 is increased compared with that of the to-be-treated film 400 without the to-be-embedded objects 40 embedded therein.

More specifically, in some embodiments, the grooves 23 have a depth of H, where 50 nanometers (nm) ≤ H ≤ 2000 nanometers (nm). By way of example, the value of H may be 50 nm, 60 nm, 100 nm, 1500 nm, 2000 nm, or any value between every two adjacent values.

Since the grooves 23 are configured to accommodate the to-be-embedded objects 40, when the size of the to-be-embedded objects 40 remains unchanged, the exposed size of the to-be-embedded objects 40 to the outside changes with the depth change of the grooves 23, and the embedding depth of the to-be-embedded objects 40 into the to-be-treated film 400 also changes accordingly. With the foregoing arrangement, an application range of the particle embedding device 100 can be expanded to obtain different to-be-treated films 400.

In some embodiments, the embedding mechanism 20 is provided with a heating portion. The heating portion is configured to heat the to-be-embedded objects 40 located at the suction portions 21.

A heating roller may be used as the roller shaft 22, whereby a heating portion may be formed on the surface of the roller shaft 22. Since the surface of the roller shaft 22 is heated, the to-be-embedded objects 40 sucked by the roller shaft 22 can be heated and softened. When the to-be-treated film 400 travels to an operating region of the roller shaft 22, the to-be-treated film 400 comes into contact with the roller shaft 22 and is softened. The softened to-be-treated film 400 and the to-be-embedded objects 40 can be combined more easily, thereby reducing the difficulty of embedding the to-be-embedded objects 40 into the to-be-treated film 400.

Further, in some embodiments, a heating range of the heating portion is a, where 100 degrees Celsius (°C) ≤ a ≤ 400 degrees Celsius (°C). By way of example, the value of H may be 100°C, 180°C, 260°C, 300°C, 400°C, or any value between every two adjacent values. Since the heating range of the heating portion is limited, a final temperature of the to-be-embedded objects 40 heated by the heating portion is naturally between 100°C and 400°C.

In this way, the particle embedding device 100 may treat the to-be-embedded objects 40 and the to-be-treated films 400 made of different materials, thereby expanding the application range of the particle embedding device 100.

In some embodiments, as shown in FIG. 1, the feeding mechanism 30 is provided with a storage cavity 32. The storage cavity 32 is configured to store the to-be-embedded objects 40. A discharge outlet of the storage cavity 32 is communicated with the suction portions 21.

The structure of the storage cavity 32 may be, but is not limited to, a cuboid or a cylinder. The to-be-embedded objects 40 required to be embedded into the to-be-treated film 400 may be pre-stored in the storage cavity 32 and then conveyed to the suction portions 21. When all the to-be-embedded objects 40 that enter the suction portions 21 in a previous round are embedded into the to-be-treated film 400, the remaining to-be-embedded objects 40 in the storage cavity 32 may be conveyed to the suction portions 21, which serves as preparation for a next round of embedding the to-be-embedded objects 40, thereby avoiding low efficiency of the particle embedding device 100 caused by the temporary shutdown of the embedding mechanism 20 for the conveying of the to-be-embedded objects 40 to the suction portions 21, thus enabling the timely conveying of the to-be-embedded objects 40 to the suction portions 21.

It may be understood that a feed inlet of the storage cavity 32 and the discharge outlet of the storage cavity 32 are different openings. The discharge outlet of the storage cavity 32 is communicated with the suction portions 21, and the feed inlet of the storage cavity 32 may be communicated with the outside and serve as a channel for conveying objects, so as to facilitate a user to convey the to-be-embedded objects 40 into the storage cavity 32 in a timely manner.

As shown in FIG. 1, in some embodiments, the embedding mechanism 20 partially enters the storage cavity 32 via the discharge outlet.

By way of example, a partial surface of the roller shaft 22 can be located in the storage cavity 32. When the roller shaft 22 rotates, the suction portions 21 of the roller shaft 22 that enter the storage cavity 32 can suck the to-be-embedded objects 40 in the storage cavity 32. The roller shaft 22 continues to rotate, and the suction portions 21 with the to-be-embedded objects 40 sucked thereon move progressively close to the to-be-treated film 400. Subsequently, the to-be-embedded objects 40 carried by the suction portions 21 can be embedded into the to-be-treated film 400. In this way, the manner in which the suction portions 21 suck the to-be-embedded objects 40 in the storage cavity 32 is simplified.

Referring to FIG. 1 further, in some embodiments, the feeding mechanism 30 further includes a shield plate 33. The shield plate 33 is movable relative to the storage cavity 32. The shield plate 33 is capable of shielding the discharge outlet. The discharge outlet is capable of being exposed from the shield plate 33.

In the example shown in FIG. 1, the two feeding mechanisms 30 may be distributed along the third direction Z, and each feeding mechanism 30 and the corresponding roller shaft 22 are distributed along the first direction X. The connection between the shield plate 33 arranged in the storage cavity 32 and the cavity wall of the storage cavity 32 may be, but is not limited to, a sliding connection or a clamping connection.

When a large number of to-be-embedded objects 40 are loaded in the storage cavity 32, the shield plate 33 may be opened to expose the discharge outlet if the suction portions 21 are required to suck the to-be-embedded objects 40. The piled to-be-embedded objects 40 may move toward the discharge outlet under the action of their own gravity. Since the discharge outlet is communicated with the suction portions 21, some of the to-be-embedded objects 40 moving toward the discharge outlet can pass through the discharge outlet and enter the suction portions 21.

When the suction portions 21 are not required to suck the to-be-embedded objects 40, the shield plate 33 may be pushed to shield the discharge outlet, thus blocking a passage between the discharge outlet and the suction portions 21.

This arrangement not only simplifies the manner in which the to-be-embedded objects 40 in the storage cavity 32 are sucked by the suction portions 21, but also simplifies the structure of the feeding mechanism 30 and reduces the preparation difficulty of the feeding mechanism 30.

In the example shown in FIG. 1, the two feeding mechanisms 30 are different in structure, and the to-be-embedded objects 40 conveyed thereby are different. Naturally, the feeding mechanisms 30 corresponding to the respective roller shafts 22 may alternatively be identical in structure. For example, in an example shown in FIG. 2, the two roller shafts 22 may be distributed along the first direction X, and the two feeding mechanisms 30 may alternatively be distributed along the first direction X. The feeding mechanisms 30 corresponding to the two roller shafts 22 adopt an identical manner for conveying the to-be-embedded objects 40.

Some embodiments of the present application further provide a particle embedding system 1000. The particle embedding system 1000 includes the particle embedding device 100 in any of the foregoing embodiments. The film feeding mechanism 10 includes a first unwinding member 11. The first unwinding member 11 is configured to unwind the to-be-treated film 400. The particle embedding system 1000 further includes a winding device 200. For the content related to the particle embedding device 100, reference is made to the relevant content recorded above. Details are not described herein again.

When the to-be-treated film 400 treated by the particle embedding system 1000 is unwound by the first unwinding member 11 and passes through the embedding mechanism 20 during traveling, the to-be-embedded objects 40 may be embedded into a surface of the to-be-treated film 400, so that the properties of the to-be-treated film 400 are changed. For example, by uniformly embedding the to-be-embedded objects 40 on the surface of the to-be-treated film 400, the strength and elastic modulus of the to-be-treated film 400 can be improved. By improving the surface roughness of the to-be-treated film 400, the surface roughness of film layers bonded together, such as the to-be-treated film 400 and a glue layer, can be improved. Alternatively, the properties of the to-be-treated film 400 are improved by adjusting preparation materials of the to-be-embedded objects 40. For example, a flame retardant is doped into the preparation materials of the to-be-embedded objects 40, to improve the flame retardancy of the to-be-treated film 400.

The strength, elastic modulus, surface roughness, and other properties of the treated film 400 are improved. Therefore, the strength, elastic modulus, surface roughness, and other properties of a finally obtained composite current collector are also improved.

Referring to FIG. 2, in some embodiments, the winding device 200 includes a second unwinding member 210 and a winding member 220. The second unwinding member 210 is configured to unwind a protective film. The protective film and the to-be-treated film 400 with the to-be-embedded objects 40 embedded therein are capable of traveling together to the winding member 220 and are wound into an integrated assembly by the winding member 220.

After the to-be-treated film 400 is treated by the embedding mechanism 20, the to-be-treated film 400 carrying the to-be-embedded objects 40 may travel to the winding member 220. The protective film unwound by the second unwinding member 210 also travels to the winding member 220. The protective film and the to-be-treated film 400 are wound into an integrated assembly by the winding member 220. The protective film may protect the to-be-treated film 400, to reduce the probability that protrusions formed on the surface of the to-be-treated film 400 due to the embedding of the to-be-embedded objects 40 have an excessively large height and pierce other parts to be treated when the to-be-treated film is wound.

The winding device 200 may further include a flattening roller 230, a deviation correcting roller 240, and a pressure roller 250. The flattening roller 230 and the deviation correcting roller 240 may be arranged in a path of the to-be-treated film 400 traveling from the roller shaft 22 to the winding member 220, so that the to-be-treated film 400 may be subjected to corresponding treatment by the flattening roller 230 and the deviation correcting roller 240. Likewise, the flattening roller 230 and the deviation correcting roller 240 may be arranged in a path of the protective film traveling from the second unwinding member 210 to the winding member 220, so that the protective film may be subjected to corresponding treatment by the flattening roller 230 and the deviation correcting roller 240.

The pressure roller 250 is additionally arranged at the winding member 220. The pressure roller 250 may be applied with pressure by an air cylinder. When being wound by the winding member 220, the to-be-treated film 400 and the protective film are first acted on by the pressure roller 250. The pressure roller 250 can discharge gas trapped between the to-be-treated film 400 and the protective film during lamination, so that a finally wound component is flatter.

In some embodiments, the to-be-treated film that has undergone embedding and winding may be sent to a subsequent vacuum coating process to form a composite current collector.

In some embodiments, the particle embedding system 1000 further includes a glue coating device. The glue coating device is configured to perform glue coating on the to-be-treated film 400 that has been treated by the particle embedding device 100.

After being treated by the embedding mechanism 20, the to-be-treated film 400 may be directly coated with glue by the glue coating device, followed by a series of operations such as drying, laminating with a metal foil, and winding, so as to obtain a composite current collector containing a glue layer.

In some embodiments, the to-be-treated film that has undergone embedding and glue coating may be sent to a subsequent vacuum coating process to form the composite current collector containing the glue layer.

When performing the process of obtaining the composite current collector containing the glue layer, the second unwinding member 210 is not required to operate, and glue coating can be directly applied to the to-be-treated film 400 with the to-be-embedded objects 40 embedded therein, thereby expanding the application range of the particle embedding system 1000.

In addition, some embodiments of the present application provide a battery production line. The battery production line includes the particle embedding system 1000 in any of the foregoing embodiments. For the content related to the particle embedding system 1000, reference is made to the relevant content recorded above. Details are not described herein again.

When the to-be-treated film 400 treated by the battery production line passes through the embedding mechanism 20 during traveling, the to-be-embedded objects 40 may be embedded into a surface of the to-be-treated film 400, so that the properties of the to-be-treated film 400 are changed. For example, by uniformly embedding the to-be-embedded objects 40 on the surface of the to-be-treated film 400, the strength and elastic modulus of the to-be-treated film 400 can be improved. By improving the surface roughness of the to-be-treated film 400, the surface roughness of film layers bonded together, such as the to-be-treated film 400 and a glue layer, can be improved. Alternatively, the properties of the to-be-treated film 400 are improved by adjusting preparation materials of the to-be-embedded objects 40. For example, a flame retardant is doped into the preparation materials of the to-be-embedded objects 40, to improve the flame retardancy of the to-be-treated film 400.

The strength, elastic modulus, surface roughness, and other properties of the treated film 400 are improved. Therefore, the strength, elastic modulus, surface roughness, and other properties of a finally obtained composite current collector are also improved.

In a specific embodiment, as shown in FIG. 1, the particle embedding device 100 includes two feeding mechanisms 30 and roller shafts 22 distributed along the third direction Z. A plurality of grooves 23 are formed in a surface of each roller shaft 22. A groove wall of each groove 23 is provided with a suction hole. Each roller shaft 22 is connected to a feeding mechanism 30 in the first direction X. The feeding mechanism 30 is communicated with the suction holes and can supply the to-be-embedded objects 40 to the suction holes.

When the to-be-treated film 400 travels to the roller shafts 22 and the grooves 23 face the to-be-treated film 400 during the rotation of the roller shafts 22, the to-be-embedded objects 40 located in the grooves 23 can be embedded into the to-be-treated film 400, can be separated from the suction portions 21, and can finally travel together with the to-be-treated film 400.

The strength, elastic modulus, surface roughness, and other properties of the to-be-treated film 400 with the to-be-embedded objects 40 embedded therein are improved. Therefore, the strength, elastic modulus, surface roughness, and other properties of a finally obtained composite current collector are also improved.

The technical features in the foregoing embodiments may be combined in any manner. For concise description, not all possible combinations of the technical features in the embodiments are described. However, provided that combinations of the technical features do not conflict with each other, the combinations of the technical features are considered as falling within the scope described in this specification.

The foregoing embodiments merely express several implementations of the present application. The descriptions thereof are relatively specific and detailed, but should not be understood as limitations to the scope of the present application. It should be noted that for a person of ordinary skill in the art, several transformations and improvements can be made without departing from the idea of the present application. These transformations and improvements belong to the protection scope of the present application. Therefore, the protection scope of the patent of the present application shall be subject to the appended claims.

## Claims

1. A particle embedding device, comprising:
a film feeding mechanism, configured to convey a to-be-treated film;
an embedding mechanism, rotatably arranged around a set axis, wherein the set axis is perpendicular to a traveling direction of the to-be-treated film, a surface of the embedding mechanism is provided with suction portions, the suction portions are arranged close to the to-be-treated film, and the suction portions are also arranged away from the to-be-treated film; and
a feeding mechanism, communicated with the embedding mechanism, wherein the feeding mechanism is configured to provide to-be-embedded objects to the suction portions, and
when the suction portions are close to the to-be-treated film, the to-be-embedded objects located at the suction portions are embedded into the to-be-treated film.

2. The particle embedding device according to claim 1, wherein the embedding mechanism comprises a roller shaft, the roller shaft rotates around the set axis, and a surface of the roller shaft is provided with the suction portions.

3. The particle embedding device according to claim 2, wherein a plurality of roller shafts are provided, at least two of the roller shafts are spaced apart oppositely to form a gap allowing passage of the to-be-treated film, and a spacing between the at least two roller shafts spaced apart oppositely is adjustable to change a size of the gap.

4. The particle embedding device according to any one of claims 2 to 3, wherein the feeding mechanism comprises a plurality of feeding members, the feeding members are in one-to-one correspondence with the roller shafts, and the feeding members are configured to provide the to-be-embedded objects to the suction portions of the roller shafts.

5. The particle embedding device according to any one of claims 2 to 4, wherein a plurality of suction portions are provided, the plurality of suction portions are distributed around the set axis, and the plurality of suction portions are further spaced apart on the surface of the roller shaft.

6. The particle embedding device according to any one of claims 1 to 5, wherein the embedding mechanism further comprises an air extraction member, the suction portions each comprise a suction hole, and the suction holes are communicated with the air extraction member.

7. The particle embedding device according to claim 6, wherein a plurality of grooves are formed in the surface of the embedding mechanism, and a groove wall of each groove is provided with the corresponding suction hole.

8. The particle embedding device according to claim 7, wherein the grooves have a depth of H, and 50 nm ≤ H ≤ 2000 nm.

9. The particle embedding device according to any one of claims 1 to 7, wherein the embedding mechanism is provided with a heating portion, and the heating portion is configured to heat the to-be-embedded objects located at the suction portions.

10. The particle embedding device according to any one of claims 1 to 9, wherein the feeding mechanism is provided with a storage cavity, the storage cavity is configured to store the to-be-embedded objects, and a discharge outlet of the storage cavity is communicated with the suction portions.

11. The particle embedding device according to claim 10, wherein the embedding mechanism partially enters the storage cavity via the discharge outlet.

12. The particle embedding device according to claim 11, wherein the feeding mechanism further comprises a shield plate, the shield plate is movable relative to the storage cavity, the shield plate is capable of shielding the discharge outlet, and the discharge outlet is capable of being exposed from the shield plate.

13. A particle embedding system, comprising the particle embedding device according to any one of claims 1 to 12, wherein the film feeding mechanism comprises a first unwinding member, and the first unwinding member is configured to unwind the to-be-treated film.

14. The particle embedding system according to claim 13, further comprising a winding device, wherein the winding device comprises a second unwinding member and a winding member, the second unwinding member is configured to unwind a protective film, and the protective film and the to-be-treated film with the to-be-embedded objects embedded therein are capable of traveling together to the winding member and are wound into an integrated assembly by the winding member.

15. The particle embedding system according to claim 13, further comprising a glue coating device, wherein the glue coating device is configured to perform glue coating on the to-be-treated film that has been treated by the particle embedding device.

16. A battery production line, comprising the particle embedding system according to any one of claims 13 to 15.
